# EUROPÄISCHE PATENTSCHRIFT

(11) **EP 0 966 785 B1**
(45) Veröffentlichungstag und Bekanntmachung des Hinweises auf die Patenterteilung: **08.02.2006**
(21) Anmeldenummer: 98916908.1
(22) Anmeldetag: 10.03.1998
(51) Int. Cl.: H02K 5/14, H02K 7/14, B60T 8/40

(54) **MOTOR-PUMPENAGGREGAT**
MOTOR PUMP UNIT
GROUPE POMPE-MOTEUR

(30) Priorität: 10.03.1997 DE 19709777
(43) Veröffentlichungstag der Anmeldung: 29.12.1999
(73) Patentinhaber: Continental Teves AG & Co. oHG, 60488 Frankfurt (DE)
(72) Erfinder: REINARTZ, Hans-Dieter, D-60439 Frankfurt am Main (DE); DINKEL, Dieter, D-65817 Eppstein (DE); BURGDORF, Jochen, D-63075 Offenbach (DE); KIEHNLE, Günter, D-75031 Eppingen (DE)
(74) Vertreter: Portwich, Peter
(86) Internationale Anmeldenummer: PCT/EP1998/001366
(87) Internationale Veröffentlichungsnummer: WO 1998/040954

(56) Entgegenhaltungen:
- EP-A- 0 645 875
- EP-A- 0 728 645
- DE-A- 2 500 296
- DE-A- 4 133 879
- DE-A- 4 320 005
- US-A- 4 080 541
- US-A- 5 530 311
- US-A- 5 668 422

## Beschreibung

Die Erfindung betrifft ein Motor-Pumpenaggregat, insbesondere für eine Kraftfahrzeug-Antiblockier-Bremsvorrichtung.

Ein Motor-Pumpenaggregat ist bereits aus der EP 645 875 B1 bekannt und umfaßt einen an einer Seite einer Pumpeneinheit angeordneten Elektromotor mit einer an einer anderen Seite der Pumpeneinheit angeordneten Elektronikeinheit. An dem pumpenabgewandten Wellenende des Elektromotors befindet sich der Kommutator, welcher von radial angeordneten Kohlebürsten beaufschlagt wird. Deren Stromversorgung dient jeweils eine elektrische Versorgungsleitung, welche durch das Motoren- und das Pumpengehäuse bis hin zu der Elektronikeinheit geführt ist. Das Motor-Pumpenaggregat ist verbesserungswürdig, weil Vorkehrungen getroffen werden müssen, um die Kohlebürsten nach der Montage des Rotors und des Motorengehäuses mit der Bürstenhalteplatte radial auf dem Kommutator abzusenken. Deshalb sind bereits besondere Köcher für die Kohlebürsten vorgeschlagen worden, mit denen die Bürsten in einer zurückgeschobenen Position gehalten werden und nach Betätigung einer Auslösevorrichtung radial aus dem Köcher in Richtung Kommutator herausgeschoben werden können. Allerdings sind die Köcher nach der Montage der Bürstenhalteplatte und des Motorengehäuses nicht mehr frei zugänglich, was erschwerend wirkt.

Ein weiterer Nachteil ist, daß die Gesamtbaulänge des Aggregates mit der Breite des Kommutators zunimmt. Ein geringer Einbauraum und insbesondere eine geringe Einbaulänge sind Grundanforderungen eines Aggregates für Kraftfahrzeuge.

Aufgabe der vorliegenden Erfindung ist es daher, ein Motor-Pumpenaggregat bereitzustellen, welches sich mit geringem Aufwand zusammenbauen läßt und in zusammengebautem Zustand wenig Bauraum beansprucht. Ferner soll die Kontaktierung der elektrischen Bauteile vereinfacht werden.

Diese Aufgabe wird mit den Merkmalen des Patentanspruches 1 gelöst. Mit der axial bewegbaren Anordnung der Kohlebürsten entfällt einerseits die Notwendigkeit des Zurückhaltens der Kohlebürsten bei bestimmten Montageschritten und andererseits ist die Baulänge des Gesamtaggregates im wesentlichen unabhängig von der Breite des Kommutators, weil es die Erfindung erlaubt, einen axial wirksamen Kommutator zu verwenden. Schließlich benötigt der erfindungsgemäße Motor keine Bürstenhalteplatte.

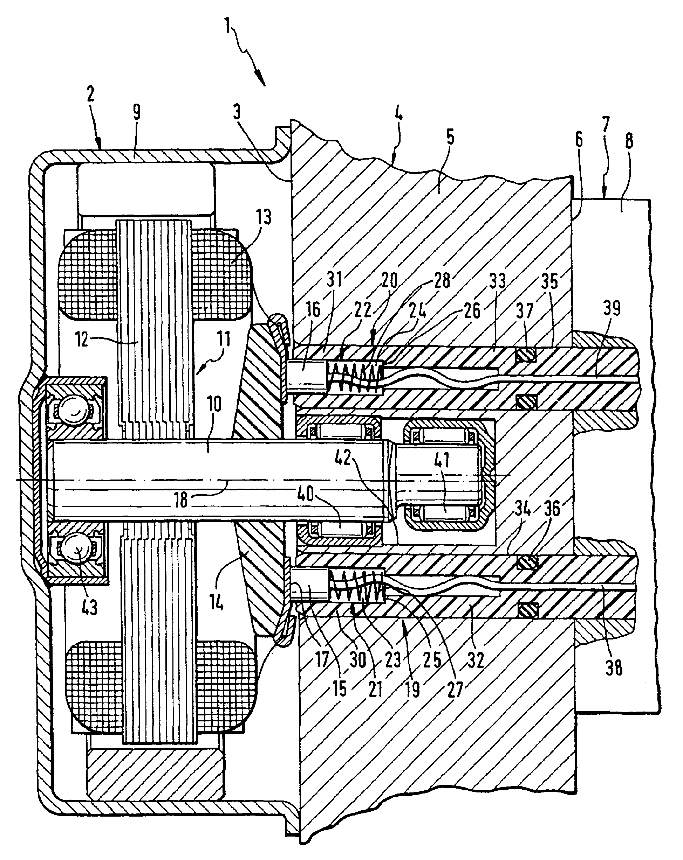

Weiterbildungen der Erfindung gehen aus Unteransprüchen im Zusammenhang mit der Beschreibung und der Zeichnung hervor. Die Erfindung wird nachstehend anhand der einzigen Fig. 1, welche ein erfindungsgemäßes Motor-Pumpenaggregat im Schnitt zeigt, näher beschrieben.

Ein Motor-Pumpenaggregat 1 wird insbesondere verwendet für eine Kraftfahrzeug-Antiblockier-Bremsvorrichtung und umfaßt einen Elektromotor 2, welcher an einer ersten Seite 3 einer Pumpeneinheit 4 mit einem Pumpengehäuse 5 angeordnet und daran befestigt ist. An einer anderen, zweiten Seite 6 des Pumpengehäuses 5 ist eine Elektronikeinheit 7 mit einem Gehäuse 8 angeordnet und befestigt und dient im wesentlichen der Ansteuerung von nicht gezeichneten Magnetventilen zur Modulation des Bremsdruckes in Bremseinheiten. Der Elektromotor 2 verfügt über ein topfförmiges Motorengehäuse 9, in dessen Innerem sich eine Motorwelle 10 mit einem Rotor 11, der einen Anker 12 sowie Wicklungen 13 aufweist, befindet. Drehfest auf der Motorwelle 10 ist ein im wesentlichen scheibenförmiger Kommutator 14 vorgesehen, welcher in axialer Richtung von Kohlebürsten 15,16 federnd beaufschlagt wird. Der Durchmesser des Kommutators 14 ist größer als dessen Baulänge. Seine Kontaktfläche 14 ist in axialer Richtung wirksam und erstreckt sich rechtwinklig zu einer Drehachse 18 des Elektromotors 2.

Es sind Mittel 19,20 zur axial bewegbaren Halterung und Kontaktierung der Kohlebürsten 15,16 für eine axiale Montage des Aggregates vorgesehen. Wie die Figur zeigt, sind die Mittel 19,20 an der Elektronikeinheit 7 vorgesehen, so daß diese zusammen mit den Kohlebürsten 15,16 eine elektrische Baueinheit bildet. Die Kohlebürsten liegen in der Ebene des Pumpengehäuses 5, so daß der Elektromotor 2 um das Maß der Kohlebürsten 15, 16 verkürzt ist. Neben den Kohlebürsten 15,16 ist eine Kontaktierung zusätzlicher elektrischer Bauteile des Elektromotors 2 oder der Pumpeneinheit 4 nicht erforderlich. Als Mittel 19,20 weist die Elektronikeinheit 7 zwei achsparallel zu der Drehachse 18 wirksame Führungselemente 21,22 für die Kohlebürsten 15,16 auf. Jedes Führungselement 21,22 ist axial fluchtend zu dem Kommutator 14 angeordnet und umfaßt im wesentlichen eine motorseitig offene Tasche 23,24 mit einer endseitigen Anschlagfläche 25,26. Zwischen den Anschlagflächen 25,26 und den Kohlebürsten 15,16 befindet sich eine Druckfeder 27,28, welche die Kohlebürsten 15,16 in Richtung auf die Kontaktfläche 17 federnd vorspannen.

Es ist darauf hinzuweisen, daß die Mittel 19, 20 auch gesondert, also unabhängig von der Elektronikeinheit in das Pumpengehäuse 5 eingebracht werden können.

Gemäß der gezeichneten Ausführungsform sind die Führungselemente 21,22 an Enden 30,31 von vorspringenden Armen 32,33 angeordnet und die Anzahl der Arme 32,33 entspricht der Anzahl der Kohlebürsten. Die Arme 32,33 sind konzentrisch zu der Motorwelle 10 entlang einer Kreisbahn angeordnet und sie erstrecken sich im wesentlichen achsparallel zu der Motorwelle 10 in Richtung auf den Kommutator 14 zu. Wie die Figur zeigt, durchgreifen die Arme 32,33 Bohrungen 34,35 des Pumpengehäuses 5 und sind mit Dichtungselementen 36,37 versehen, welche an der Bohrungswandung anliegen. Es bleibt darauf hinzuweisen, daß sich im Inneren der Arme 32,33 Leiterelemente 38,39 erstrecken, die zur elektrischen Kontaktierung der Kohlebürsten 15,16 dienen und zu elektrischen Anschlußelementen im Bereich der Elektronikeinheit 7 führen. Dadurch ist kein gesonderter elektrischer Anschluß für den Elektromotor 2 notwendig.

Im wesentlichen geschieht die Montage des Motor-Pumpenaggregats wie folgt. In einem ersten Verfahrensschritt wird der Rotor 11 zusammen mit der Motorwelle 10, dem drehfest darauf angeordneten Kommutator 14 und aufgeschobenen Lagerelementen 40,41 axial in eine Aufnahmebohrung 42 des Pumpengehäuses 5 gesteckt, so daß das Lagerelement 41 für den Pumpenexzenter mit seinem Topfboden am Boden der Aufnahmebohrung 42 aufliegt. In einem zweiten Verfahrensschritt wird das Elektromotorengehäuse 9 auf das freie Ende der Motorwelle 10 axial aufgeschoben und an der Pumpeneinheit 4 befestigt. Vorteilhaft ist es, wenn der Topfboden des Motorengehäuses 9 einen entsprechenden Napf zur Aufnahme des Stützlagers 43 aufweist. In einem letzten Verfahrensschritt wird die Elektronikeinheit 7 axial in Richtung auf den Motor 2 auf die Pumpeneinheit 4 aufgesteckt, so daß die Arme 32,33 die Pumpeneinheit 4 durchgreifen. Weil die Kohlebürsten 15,16 axial bewegbar an der Elektronikeinheit 7 angeordnet sind, sind keinerlei Maßnahmen erforderlich, um diese in einer zurückgeschobenen Position zu halten, wie dies bei radialer Anordnung der Kohlebürsten notwendig ist.

## Patentansprüche

1. Motor-Pumpenaggregat, insbesondere für eine Kraftfahrzeug-Antiblockier-Bremsvorrichtung, mit einem Elektromotor (2), umfassend eine Drehachse (18), einen Rotor (11), und eine Motorwelle (10) mit einem drehfest darauf angeordneten, im wesentlichen scheibenförmigen, Kommutator (14), der in axialer Richtung von Kohlebürsten (15) federnd beaufschlagt wird, wobei der Elektromotor (2) in axialer Richtung an einer Seite (3) eines Pumpengehäuse (5) befestigt ist, und wobei eine Elektronikeinheit (7) an einer, in axialer Richtung anderen Seite (6) des Pumpengehäuse (5) befestigt ist, und wobei Mittel (19,20) zur axial bewegbaren Halterung und elektrischen Kontaktierung der Kohlebürsten (15,16) in das Pumpengehäuse (5) eingebracht sind, die für eine axiale Montage des Aggregates vorgesehen sind.

2. Motor-Pumpenaggregat nach Anspruch 1, **dadurch gekennzeichnet, daß** die Mittel (19,20) in der Ebene des Pumpengehäuses (5) vorgesehen sind.

3. Motor-Pumpenaggregat nach einem oder mehreren der vorhergehenden Ansprüche, **dadurch gekennzeichnet, daß** die Elektronikeinheit (7) zur Bildung einer elektrischen Baugruppe mit den Mitteln (19,20) zur Halterung und Kontaktierung der Kohlebürsten (15,16) versehen ist.

4. Motor-Pumpenaggregat nach einem oder mehreren der vorhergehenden Ansprüche, **dadurch gekennzeichnet, daß** die Elektronikeinheit (7) mindestens zwei achsparallel zu einer Drehachse (18) wirksame Führungselemente (21,22) für die Kohlebürsten (15,16) aufweist.

5. Motor-Pumpenaggregat nach einem oder mehreren der vorhergehenden Ansprüche, **dadurch gekennzeichnet, daß** die Führungselemente (21,22) fluchtend zu einem Kommutator mit rechtwinklig zur Drehachse (18) vorgesehener Kontaktfläche (17) angeordnet ist.

6. Motor-Pumpenaggregat nach einem oder mehreren der vorhergehenden Ansprüche, **dadurch gekennzeichnet, daß** jedes Führungselement (21,22) eine motorseitig offene Tasche (23,24) zur axial bewegbaren Aufnahme einer Kohlebürste (15,16) aufweist.

7. Motor-Pumpenaggregat nach einem oder mehreren der vorhergehenden Ansprüche, **dadurch gekennzeichnet, daß** jede Tasche (23,24) an einem Motor abgewandten Ende von einer Anschlagfläche (25,26) begrenzt wird.

8. Motor-Pumpenaggregat nach einem oder mehreren der vorhergehenden Ansprüche, **dadurch gekennzeichnet, daß** die Anschlagfläche (25,26) von einer Druckfeder (27,28) beaufschlagt wird, deren anderes Ende eine Kohlebürste (15,16) in Richtung auf den Kommutator (14) beaufschlagt.

9. Motor-Pumpenaggregat nach einem oder mehreren der vorhergehenden Ansprüche, **dadurch gekennzeichnet, daß** die Führungselemente (21,22) an Enden (30,31) von vorspringenden Armen (32,33) vorgesehen sind.

10. Motor-Pumpenaggregat nach einem oder mehreren der vorhergehenden Ansprüche, **dadurch gekennzeichnet, daß** mehrere Arme (32,33) entsprechend der Anzahl der Kohlebürsten (15,16) vorgesehen sind.

11. Motor-Pumpenaggregat nach einem oder mehreren der vorhergehenden Ansprüche, **dadurch gekennzeichnet, daß** die Arme (32,33) konzentrisch zu der Motorwelle (10) angeordnet sind.

12. Motor-Pumpenaggregat nach einem oder mehreren der vorhergehenden Ansprüche, **dadurch gekennzeichnet, daß** sich die Arme (32,33) achsparallel zu der Motorwelle (10) in Richtung auf den Motor (2) zu erstrecken.

13. Motor-Pumpenaggregat nach einem oder mehreren der vorhergehenden Ansprüche, **dadurch gekennzeichnet, daß** jeder Arm (32,33) die Pumpeneinheit (4) durchgreift.

## Claims

1. A motor-driven pump unit, in particular for an antilock brake device of motor vehicles, with an electric motor (2) comprising a rotary axis (18), a rotor (11), and a motor shaft (10) with a substantially disc-shaped commutator (14) that is unrotatably arranged on the shaft and, in an axial direction, is resiliently acted upon by carbon brushes (15), with the electric motor (2) being attached in an axial direction on a side (3) of a pump housing (5), and with an electric unit (7) being attached on another side (6) of the pump housing (5) in an axial direction, and with means (19, 20) being provided in the pump housing (5) for the axially movable mounting support and electric contacting of the carbon brushes (15, 16), said means being provided for an axial installation of the unit.

2. A motor-driven pump unit according to claim 1,
**characterized in that** the means (19, 20) are arranged at the level of the pump housing (5).

3. A motor-driven pump unit according to one or more of the preceding claims,
**characterized in that** the electronic unit (7) is provided with the means (19, 20) for mounting and contacting the carbon brushes (15, 16) in order to form an electric constructional unit.

4. A motor-driven pump unit according to one or more of the preceding claims,
**characterized in that** the electronic unit (7) has at least two guide elements (21, 22) for the carbon brushes (15, 16), which are effective parallel to a rotary axis (18).

5. A motor-driven pump unit according to one or more of the preceding claims,
**characterized in that** the guide elements (21, 22) are arranged in alignment with a commutator having a contact surface (17) that is at a right angle to the rotary axis (18).

6. A motor-driven pump unit according to one or more of the preceding claims,
**characterized in that** each guide element (21, 22) has a box (23, 24) that is open towards the motor for holding one of the carbon brushes (15, 16) in an axially movable manner.

7. A motor-driven pump unit according to one or more of the preceding claims,
**characterized in that** each box (23, 24) is limited by a stop surface (25, 26) at an end facing away from the motor.

8. A motor-driven pump unit according to one or more of the preceding claims,
**characterized in that** the stop surface (25, 26) is acted upon by a pressure spring (27, 28), whose other end acts upon a carbon brush (15, 16) in the direction of the commutator (14).

9. A motor-driven pump unit according to one or more of the preceding claims,
**characterized in that** the guide elements (21, 22) are arranged at the ends (30, 31) of protruding arms (32, 33).

10. A motor-driven pump unit according to one or more of the preceding claims,
**characterized in that** several arms (32, 33) are provided corresponding to the number of carbon brushes (15, 16).

11. A motor-driven pump unit according to one or more of the preceding claims,
**characterized in that** the arms (32, 33) are arranged concentrically to the motor shaft (10).

12. A motor-driven pump unit according to one or more of the preceding claims,
**characterized in that** the arms (32, 33) extend parallel to the axis of the motor shaft (10) in the direction of the motor (2).

13. A motor-driven pump unit according to one or more of the preceding claims,
**characterized in that** each arm (32, 33) extends through the pump unit (4).

## Revendications

1. Groupe motopompe, en particulier pour un dispositif de freinage d'antiblocage de véhicule automobile, avec un moteur électrique (2) comprenant un axe de rotation (18), un rotor (11) et un arbre moteur (10) avec un commutateur (14), sensiblement en forme de disque, disposé solidairement en rotation sur celui-ci et qui est sollicité élastiquement, dans la direction axiale, par des balais de charbon (15), le moteur électrique (2) étant fixé, dans la direction axiale, sur une face (3) du carter de pompe (5), et une unité électronique (7) étant fixée sur une autre face (6), dans la direction axiale, du carter de pompe (5), et des moyens (19, 20), prévus pour un montage axial du groupe, étant placés dans le carter de pompe (5) pour la fixation axialement mobile et la mise en contact électrique des balais de charbon (15, 16).

2. Groupe motopompe selon la revendication 1, **caractérisé en ce que** les moyens (19, 20) sont prévus dans le plan du carter de pompe (5).

3. Groupe motopompe selon une ou plusieurs des revendications précédentes, **caractérisé en ce que** pour former un ensemble électrique, l'unité électronique (7) est pourvue des moyens (19, 20) de fixation et de mise en contact des balais de charbon (15, 16).

4. Groupe motopompe selon une ou plusieurs des revendications précédentes, **caractérisé en ce que** l'unité électronique (7) comporte au moins deux éléments de guidage (21, 22), agissant parallèlement à un axe de rotation (18), pour les balais de charbon (15, 16).

5. Groupe motopompe selon une ou plusieurs des revendications précédentes, **caractérisé en ce que** les éléments de guidage (21, 22) sont disposés alignés avec un commutateur avec surface de contact (17) prévue perpendiculairement à l'axe de rotation (18).

6. Groupe motopompe selon une ou plusieurs des revendications précédentes, **caractérisé en ce que** chaque élément de guidage (21, 22) comporte une poche (23, 24), ouverte côté moteur, pour la réception axialement déplaçable d'un balai de charbon (15, 16).

7. Groupe motopompe selon une ou plusieurs des revendications précédentes, **caractérisé en ce que** chaque poche (23, 24) est limitée par une surface de butée (25, 26), à une extrémité opposée au moteur.

8. Groupe motopompe selon une ou plusieurs des revendications précédentes, **caractérisé en ce que** la surface de butée (25, 26) est sollicitée par un ressort de pression (27, 28) dont l'autre extrémité sollicite un balai de charbon (15, 16) en direction du commutateur (14).

9. Groupe motopompe selon une ou plusieurs des revendications précédentes, **caractérisé en ce que** les éléments de guidage (21, 22) sont prévus à des extrémités (30, 31) de bras (32, 33) saillants.

10. Groupe motopompe selon une ou plusieurs des revendications précédentes, **caractérisé en ce que** plusieurs bras (32, 33) sont prévus en fonction du nombre de balais de charbon (15, 16).

11. Groupe motopompe selon une ou plusieurs des revendications précédentes, **caractérisé en ce que** les bras (32, 33) sont disposés concentriquement à l'arbre moteur (10).

12. Groupe motopompe selon une ou plusieurs des revendications précédentes, **caractérisé en ce que** les bras (32, 33) s'étendent parallèlement à l'axe de l'arbre moteur (10) en direction du moteur (2).

13. Groupe motopompe selon une ou plusieurs des revendications précédentes, **caractérisé en ce que** chaque bras (32, 33) traverse l'unité de pompe (4).
